# EUROPÄISCHE PATENTSCHRIFT

(11) **EP 0 899 860 B1**
(45) Veröffentlichungstag und Bekanntmachung des Hinweises auf die Patenterteilung: **16.10.2002**
(21) Anmeldenummer: 98113731.8
(22) Anmeldetag: 23.07.1998
(51) Int. Cl.: H02M 7/48

(54) **Leistungsendstufenschaltung mit PWM-Betrieb und Dauereinschaltbetrieb**
Power output stage with PWM operation and continuous conduction operation
Etage de sortie de puissance avec opération à modulation de largeur d'impulsion et opération à conduction continue

(30) Priorität: 21.08.1997 DE 19736338
(43) Veröffentlichungstag der Anmeldung: 03.03.1999
(73) Patentinhaber: GKR Gesellschaft für Fahrzeugklimaregelung mbH, D-71701 Schwieberdingen (DE)
(72) Erfinder: Eisenhardt, Harald, 71277 Rutesheim (DE); Falliano, Rolf, 73635 Steinenberg (DE)
(74) Vertreter: Voss, Klaus, Dipl.-Ing.

(56) Entgegenhaltungen:
- EP-A- 0 650 249
- US-A- 5 180 964
- US-A- 5 623 198

## Beschreibung

### Stand der Technik

Die Erfindung betrifft eine Leistungsendstufenschaltung mit einem geregelten Pulsweitenmodulations-Generator und einer vorgeschalteten Regelschaltung, die in Abhängigkeit von einem externen vorgebbaren Sollwert, einem Istwert der Leistungsendstufe und einer von der Versorgungsspannung abgeleiteten Bezugsspannung den Pulsweitenmodulations-Generator und die Leistungsendstufe in einen Dauerausschaltzustand, einen PWM-Betrieb mit pulsweitenmodulierten Pulsen und einen Dauereinschaltzustand steuert.

Bei einer Leistungsendstufenschaltung dieser vorgeschlagenen Art besteht kurz vor dem Übergang vom PWM-Betrieb in den Dauereinschaltbetrieb die Gefahr, daß die Leistungsendstufe nicht mehr eindeutig getaktet wird. Dies ist insbesondere dann der Fall, wenn die Pulspausen im Grenzbereich des PWM-Bereiches eine Dauer annehmen, die in der Größenordnung der Dauer der Schaltflanken der Pulse des Ansteuersignals liegen. Dies führt zu unvollkommener Durchschaltung der Leistungsendstufe, was sich in einer höheren Verlustleistung in der Leistungsendstufe auswirkt. Die Kühlung der Leistungsendstufe muß daher auf diese erhöhte Verlustleistung dimensioniert werden. Außerdem entsteht bei der unvollkommenen Taktung der Endstufe eine höhere EMV, infolge der auftretenden Bursts. Darüberhinaus können durch die Pulspakete niederfrequente Schwingungen hörbar werden.

### Vorteile der Erfindung

Es ist Aufgabe der Erfindung, eine Leistungsendstufenschaltung der eingangs erwähnten Art zu schaffen, bei der gerade in dem Grenzbereich vom PWM-Betrieb zur Dauereinschaltung der Leistungsendstufe eine erhöhte Verlustleistung und hohe EMV vermieden sind. Außerdem soll der Aufwand für die Kühlung der Leistungsendstufe reduziert werden können.

Diese Aufgabe wird nach der Erfindung dadurch gelöst, daß sie in Abhängigkeit von einem vorgebbaren Sollwert und der Versorgungsspannung vorzeitig vom PWM-Betrieb in den Dauereinschaltbetrieb übergeht und mit einer Hysterese dieser Werte wieder in den PWM-Betrieb zurückkehrt.

Durch den vorzeitigen Übergang vom PWM-Betrieb in den Dauereinschaltbetrieb und die Rückkehr vom Dauereinschaltbetrieb in den PWM-Betrieb über eine Hysterese wird erreicht, daß der für das Auftreten erhöhter Verlustleistung und erhöhter EMW kritische Endbereich mit kurzen Pausen vermieden wird.

Auf einfachste Weise kann der vorzeitige Übergang dadurch eingeleitet werden, daß der Regelschaltung eine zusätzliche Vorspannung zugeführt ist, die in Verbindung mit einem vorgegebenen Sollwert, der um einen vorgegebenen Betrag gegenüber dem die maximale Pulsweite bewirkenden Sollwert kleiner ist, den Pulsweitenmodulations-Generator und die Leistungsendstufe vorzeitig sprungartig in den Dauereinschaltzustand steuert.

Erreicht der Sollwert den durch die zusätzliche Vorspannung vorgegebenen Wert, dann wird die Regelschaltung so beeinflußt, daß sie schon vor dem Erreichen des maximalen Sollwertes sprungartig den Pulsmodulations-Generator und die Leistungsendstufe in den Dauereinschaltzustand steuert. Dadurch werden Spannungsspitzen in der Ausgangsspannung der Leistungsendstufe, die zu einer höheren Verlustleistung führen, sicher vermieden. Die EMV wird zudem niedrig gehalten und der Aufwand für die Kühlung kann klein gehalten werden, da sich die Verlustleistung und damit die abzuführende Wärme in der Leistungsendstufe gerade in diesen Grenzbereich zur Vollast, d.h. zum Dauereinschaltzustand, nicht erhöht hat.

Der Einsatzpunkt der vorzeitigen Steuerung in den Dauereinschaltzustand wird nach einer Ausgestaltung so festgelegt, daß der vorgegebene Sollwert einer Pulsweite von etwa 95 % der maximalen Pulsweite (Periodendauer) entspricht. Dabei wird insbesondere so verfahren, daß die beim vorgegebenen Sollwert erreichte Pulsweite um eine Dauer gegenüber der Periodendauer reduziert ist, die größer ist als die Zeiten der Schaltflanken der Pulse im PWM-Betrieb.

Die Leistungsendstufenschaltung ist nach einer Ausgestaltung so ausgeführt, daß die Regelschaltung einen Spannungsregler enthält, dessen nichtinvertierenden Steuereingang die Bezugsspannung und dessen invertierenden Steuereingang über einen Widerstand der Sollwert und über einen Widerstand die Ausgangsspannung der Leistungsendstufe als Istwert zugeführt sind, daß der Spannungsregler eine Regelspannung abgibt, die mit zunehmendem Sollwert zunimmt, daß der Pulsweitenmodulations-Generator einen Sägezahngenerator aufweist, dessen Ausgangsspannung sich zwischen einem unteren und einem oberen Spannungswert periodisch ändert, daß bei einer Regelspannung kleiner als der untere Spannungswert der Pulsweitenmodulations-Generator kein Ansteuersignal an die Leistungsendstufe abgibt, daß bei einer Regelspannung größer als der untere Spannungswert aber kleiner als der obere Spannungswert der Pulsweitenmodulations-Generator die Leistungsendstufe mit zunehmendem Sollwert im PWM-Betrieb mit zunehmender Pulsweite steuert und daß bei einer Regelspannung größer als der obere Spannungswert der Pulsweitenmodulations-Generator die Leistungsendstufe in den Dauereinschaltzustand steuert, um alle Betriebszustände erfassen zu können. Dabei läßt sich der vorzeitige sprungartige Übergang in den Dauereinschaltzustand einfach dadurch erreichen, daß die zusätzliche Vorspannung dem nichtinvertierenden Steuereingang zugeführt ist, und dem invertierenden Steuereingang einer Aufschaltestufe der Sollwert zugeführt sind, daß bei Übereinstimmung des vorgegebenen Sollwertes mit der Vorspannung das Ausgangspotential der Aufschaltestufe vom Massepotential zum Pluspotential wechselt, daß der Ausgang der Aufschaltestufe über eine Entkopplungsdiode mit dem nichtinvertierenden Steuereingang des Spannungsreglers verbunden ist und daß das Ausgsgangspotential der Aufschaltestufe einen Spannungssprung am nichtinvertierenden Steuereingang des Spannungsreglers erzeugt, der einen Spannungssprung zur Vergrößerung der Regelspannung zur Folge hat und den Pulsweitenmodulations-Generator und die Leistungsendstufe sprungartig in den Dauereinschaltzustand steuert.

Diese Schaltungsauslegung ist ein mögliches Ausführungsbeispiel. Die im Spannungsregler und in der Aufschaltestufe verwendeten Komparatoren oder Operationsverstärker lassen sich auch vertauscht ansteuern und der Spannungssprung läßt sich auch im Sollwert realisieren. Die andere Ansteuerung kann sich am Ausgang des Spannungsreglers auch so auswirken, daß die Regelspannung mit zunehmendem Sollwert abnimmt. Dann ist die Pulsweite des Ansteuersignals am größten, wenn sich die Regelspannung dem unteren Wert des Sägezahngenerators nähert und der Dauereinschaltzustand dann eingenommen wird, wenn die Regelspannung den unteren Spannungswert des Sägezahngenerators unterschreitet. Je nach Auslegung und Anschaltung der Steuerspannungen an den Komparatoren oder Operationsverstärkern kann es erforderlich sein, die Entkopplungsdiode umzupolen.

Ist zudem vorgegeben, daß der Ausgang der Aufschaltestufe über einen Widerstand mit dem nichtinvertierenden Steuereingang derselben verbunden ist, der zur Reduzierung der Vorspannung führt, die etwa einem Sollwert von etwa 92 % des maximalen Sollwertes entspricht, dann wird für die vorzeitige Steuerung in den Dauereinschaltzustand und die Wiederaufnahme des PWM-Betriebes beim Absinken des Sollwertes eine Schalthysterese erreicht, die ein Hin- und Herpendeln der Regelschaltung vermeidet.

Der Aufwand für die Regelung und den Übergang vom PWM-Betrieb in den Dauereinschaltbetrieb läßt sich nach einer weiteren Ausgestaltung dadurch reduzieren, daß ein Mikroprozessor die Funktionen von Spannungsregler und Aufschaltestufe steuert.

Die Erfindung wird anhand eines in den Zeichnungen dargestellten Ausführungsbeispiels näher erläutert. Es zeigen:
- Fig. 1: den Stromlaufplan einer Leistungsendstufenschaltung mit Reglerschaltung und Aufschaltestufe, die vorzeitig vom PWM-Betrieb in den Dauereinschaltzustand übergeht,
- Fig. 2: ein Spannungszeitdiagramm der Ausgangsspannung an der Leistungsendstufe,
- Fig. 3: das Spannungszeitdiagramm der Ausgangsspannung bei sehr kurzer Pause des PWM-Ansteuersignals und
- Fig. 4: das Spannungszeitdiagramm der Ausgangsspannung bei einem Sollwert, der einem PWM-Ansteuersignal mit sehr kurzer Pause entspricht, bei diesem Sollwert jedoch vorzeitig schon in den Dauereinschaltzustand gesteuert ist.

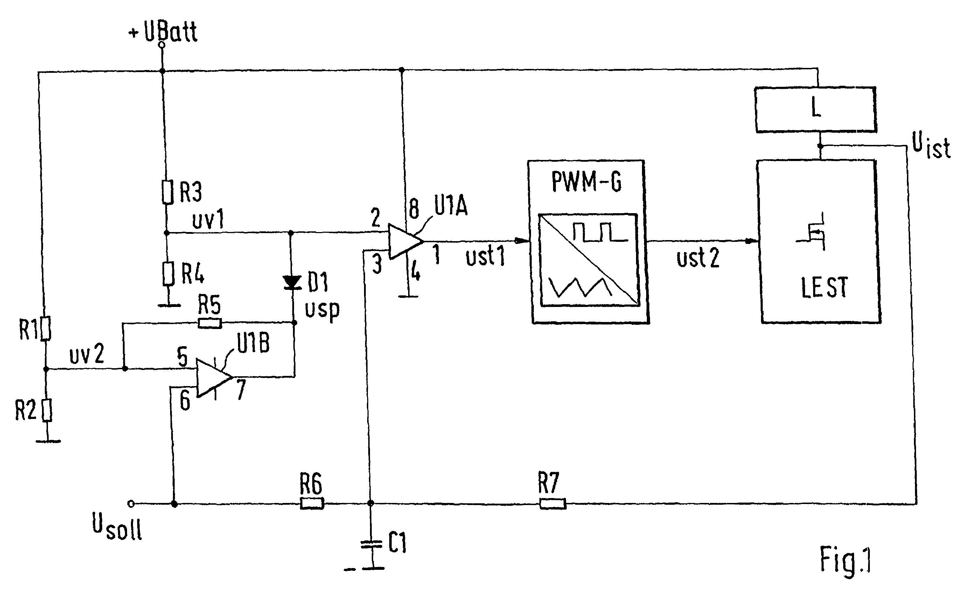

Wie Fig. 1 erkennen läßt, weist die Leistungsendstufenschaltung eine Leistungsendstufe LEST auf, die aus einem oder mehreren parallelgeschalteten Leistungshalbleitern, wie FET-Transistoren, aufgebaut sein kann und einen Verbraucher L steuert. Dabei wird die Leistungsendstufe LEST mit einem Ansteuersignal ust2 gesteuert, das von einem geregelten Pulsweitenmodulations-Generator PWM-G abgegeben wird, der selbst wiederum von einer Regelspannung ust1 eines Spannungsreglers U1A gesteuert wird. Der Pulsweitenmodulations-Generator PWM-G weist einen Sägezahngenerator auf, der eine Ausgangsspannung erzeugt, die sich periodisch zwischen einem unteren Spannungswert und einem oberen Spannungswert ändert. Liegt die Regelspannung ust1 zwischen diesen beiden Spannungswerten der Ausgangsspannung des Sägezahngenerators, dann gibt der Pulsweitenmodulations-Generator PWM-G ein pulsweitenmoduliertes Ansteuersignal ust2 ab, dessen Frequenz vorgegeben ist, dessen Pulsweite sich aber in Abhängigkeit von der Regelspannung ust1 ändert. Liegt die Regelspannung ust1 knapp über dem unteren Spannungswert der Ausgangsspannung des Sägezahngenerators, dann ist die Pulsweite des Ansteuersignals ust2 sehr klein und nimmt bei Übereinstimmung vom oberen Spannungswert des Sägezahngenerators und der Regelspannung ust1 die gesamte Periodendauer der Ausgangsspannung des Sägezahngenerators ein, wenn keine Vorkehrungen zur vorzeitigen Einstellung des Dauereinschaltzustandes getroffen sind. Diese Einstellung wird üblicherweise dann vorgenommen, wenn die Regelspannung ust1 größer ist als der obere Spannungswert der Ausgangsspannung des Sägezahngenerators. Übersteigt die Regelspannung ust1 den oberen Spannungswert der Ausgangsspannung des Sägezahngenerators, dann geht der Pulsweitenmodulations-Generator PWM-G in die Dauereinschaltstellung. Das Ansteuersignal ust2 steuert die Leistungsendstufe LEST in den Dauerauschaltezustand, wenn die Regelspannung ust1 den unteren Spannungswert des Sägezahngenerators unterschreitet.

Den Pulsweitenmodulations-Generator PWM-G ist zur Erzeugung der Regelspannung ust1 ein Spannungsregler U1A vorgeschaltet. Dem nichtinvertierenden Steuereingang 2 des Komparators U1A wird eine Bezugsspannung uv1 zugeführt, die an einem Spannungsteiler aus den Widerständen R3 und R4 abgegriffen wird. Der invertierende Steuereingang 3 des Komparators U1A wird über einen Widerstand R7 ein Istwert Uist der Leistungsendstufe LEST und über einen Widerstand R6 ein externer Sollwert Usoll zugeführt. Der lstwert Uist entspricht dabei der Ausgangsspannung ua der Leistungsendstufe LEST. Der invertierende Steuereingang 3 des Spannungsreglers U1A ist zudem über einen Glättungskondensator C1 mit dem Massepotential der Versorgungsausgang Ubatt verbunden.

Bei der Inbetriebnahme der Leistungsendstufenschaltung liegt der Sollwert Usoll auf Massepotential, das dann dem invertierenden Steuereingang 6 einer Aufschaltestufe U1B zugeführt wird. Dem nichtinvertierenden Steuereingang 5 der Aufschaltestufe U1B wird über den Spannungsteiler aus den Widerständen R1 und R2 eine Vorspannung uv2 zugeführt, die einem Sollwert Usollv von etwa 95 % des maximalen Sollwertes Usollmax entspricht. Der Ausgang 7 der Aufschaltestufe U1B liegt bei dieser Inbetriebnahme auf Pluspotential. Über die Diode D1 kann das Pluspotential nicht auf den Steuereingang 2 des Spannungsreglers durchgreifen. Da bei der Inbetriebnahme der Leistungsendstufenschaltung der Istwert Uist praktisch dem Pulspotential +Ubatt der Versorgungsspannung entspricht und das Widerstandsverhältnis der Widerstände R3 und R4 sowie der Widerstände R6 und R7 gleich groß ist, führen beide Steuereingänge 2 und 3 des Spannungsreglers mit uv1 und Uist gleiches Potential. Der Spannungsregler U1A gibt keine Regelspannung ust1 ab. Die Leistungsendstufe LEST wird nicht angesteuert und bleibt abgeschaltet.

Wird der Sollwert Usoll in Richtung Pluspotential erhöht, dann übersteigt das Potential am Steuereingang 3 des Spannungsreglers die Bezugsspannung uv1 und der Spannungsregler gibt eine Regelspannung ust1 ab, die mit dem Anstieg des Sollwertes Usoll proportional zunimmt. Übersteigt die Regelspannung ust1 den unteren Spannungswert der Ausgangsspannung des Sägezahngenerators, dann erzeugt der Pulsweitenmodulations-Generator PWM-G eine Impulssequenz, bei der die Frequenz durch die Frequenz des Sägezahngenerators vorgegeben ist, die Pulsweite aber mit der Größe der Regelspannung ust1 zunimmt. Ohne die Aufschaltestufe U1B würde die Pulsweite die volle Periodendauer einnehmen, wenn die Regelspannung ust1 dem oberen Spannungswert der Ausgangsspannung des Sägezahngenerators entspricht. Da aber gerade in diesem Grenzbereich mit kurzen Pulspausen die Leistungsendstufe LEST nicht mehr eindeutig getaktet und durchgeschaltet wird, ergeben sich gerade in den Schaltflanken Spannungsspitzen in der Ausgangsspannung ua und damit dem Istwert Uist der Leistungsendstufe LEST, die eine erhöhte Verlustleistung und erhöhte EMV zur Folge haben, wie die Ausgangsspannung ua nach Fig. 3 erkennen läßt.

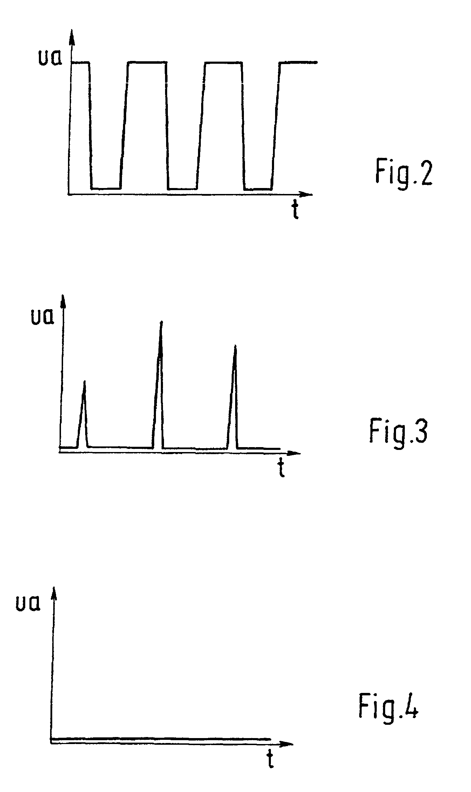

Erreicht der Sollwert Usollv diesen Grenzbereich und entspricht dieser der zusätzlich vorgegebenen Vorspannung uv2 an der Aufschaltestufe U1B, dann wechselt das Potential am Ausgang 7 derselben auf das Massepotential der Versorgungsspannung. Dies bedingt einen Spannungssprung usp am Steuereingang 2 des Spannungsreglers U1A in der Weise, daß die Differenz zu der am Steuereingang 3 anliegenden Steuerspannung sprunghaft vergrößert wird. Die Regelspannung ust1 macht ebenfalls einen Sprung und überschreitet schlagartig den oberen Spannungswert der Ausgangsspannung des Sägezahngenerators. Der Pulsweitenmodulations-Generator PWM-G gibt ein Dauer-Ansteuersignal ust2 an die Leistungsendstufe LEST ab, das diese eindeutig in den Dauereinschaltzustand steuert und diesen Zustand aufrecht hält. Die Ausgangsspannung ua an der Leistungsendstufe LEST ist in Fig. 4 gezeigt.

Die hohe Verlustleistung in der Leistungsendstufe LEST ist vermieden. Es entsteht weniger Abwärme, die über einen Kühlkörper oder dgl. abgeführt werden muß. Der Aufwand für die Kühlung kann reduziert werden. Das eindeutige Schaltverhalten der Leistungsendstufe führt zur Reduzierung der EMV, da keine Bursts auftreten. Außerdem sind keine niederfrequenten Schwingungen hörbar, die bei gestörten Pulspaketen auftreten würden.

Der Ausgang 7 der Aufschaltestufe U1B ist über einen Widerstand R5 mit dem nichtinvertierenden Steuereingang 5 der Aufschaltestufe U1B gekoppelt, um eine Schalthysterese zu erhalten. Damit wird die Vorspannung uv2 etwas reduziert und erreicht, daß die Aufschaltestufe U1B bei einem reduzierten Sollwert Usoll auf Massepotential zurückschaltet, wenn dieser auf ca. 92 % des maximalen Sollwertes Usollmax gesenkt wird. Die Leistungsendstufenschaltung geht dann wie-der in den PWM-Betrieb über.

Die Schaltzeitpunkte der Aufschaltestufe U1B sind an die Dauer der Schaltflanken der Pulse der Ansteuersignale ust2 so angepaßt, daß die vorzeitige Einstellung des Dauereinschaltzustandes der Leistungsendstufe LEST vorgenommen wird, bevor die Pulspausen kleiner als die Dauer der Schaltflanken werden. Es hat sich als vorteilhaft erwiesen, daß die Einstellung des Dauereinschaltzustandes vorgenommen wird, wenn der vorgegebene Sollwert Usoll etwa 95 % des maximalen Sollwertes Usollmax entspricht, bei dem üblicherweise in den Dauereinschaltzustand übergegangen würde. Die Schalthysterese wird so festgelegt, daß die Zurückschaltung auf den PWM-Betrieb bei einem vorgegebenen Sollwert Usoll vorgenommen wird, der etwa 92 % des maximalen Sollwertes Usollmax entspricht.

## Patentansprüche

1. Leistungsendstufenschaltung mit einem Pulsweitenmodulations-Generator und einer vorgeschalteten Regelschaltung, die in Abhängigkeit von einem externen vorgebbaren Sollwert, einem Istwert der Leistungsendstufe und einer von der Versorgungsspannung abgeleiteten Bezugsspannung den Pulsweitenmodulations-Generator und die Leistungsendstufe in einen Dauerausschaltzustand, einen PWM-Betrieb mit pulsweitenmodulierten Pulsen und einen Dauereinschaltzustand steuert,
**dadurch gekennzeichnet,**
**daß** sie in Abhängigkeit von einem vorgebbaren Sollwert und der Versorgungsspannung (Ubatt) vorzeitig vom PWM-Betrieb in den Dauereinschaltbetrieb übergeht und mit einer Hysterese dieser Werte wieder in den PWM-Betrieb zurückkehrt.

2. Leistungsendstufenschaltung nach Anspruch 1,
**dadurch gekennzeichnet,**
**daß** der Regelschaltung eine zusätzliche Vorspannung (uv2) zugeführt ist, die in Verbindung mit einem vorgegebenen Sollwert (Usollv), der um einen vorgegebenen Betrag gegenüber dem die maximale Pulsweite bewirkenden Sollwert (Usollmax) kleiner ist, den Pulsweitenmodulations-Generator (PWM-G) und die Leistungsendstufe (LEST) vorzeitig sprungartig in den Dauereinschaltzustand steuert.

3. Leistungsendstufenschaltung nach Anspruch 1 oder 2,
**dadurch gekennzeichnet,**
**daß** der vorgegebene Sollwert (Usollv) einer Pulsweite von etwa 95 % der maximalen Pulsweite (Periodendauer) entspricht.

4. Leistungsendstufenschaltung nach einem der Ansprüche 1 bis 3,
**dadurch gekennzeichnet,**
**daß** die beim vorgegebenen Sollwert (Usollv) erreichte Pulsweite um eine Dauer gegenüber der Periodendauer reduziert ist, die größer ist als die Zei-ten der Schaltflanken der Pulse im PWM-Betrieb.

5. Leistungsendstufenchaltung nach einem der Ansprüche 1 bis 4,
**dadurch gekennzeichnet,**
**daß** die Regelschaltung einen Spannungsregler (U1A) enthält, dessen nichtinvertierenden Steuereingang (2) die Bezugsspannung (uv1) und dessen invertierenden Steuereingang (3) über einen Widerstand (R6) der Sollwert (Usoll) und über einen Widerstand (R7) die Ausgangsspannung (ua) der Leistungsendstufe (LEST) als Istwert (Uist) zugeführt sind,
**daß** der Spannungsregler (U1A) eine Regelspannung (ust1) abgibt, die mit zunehmendem Sollwert (Usoll) zunimmt,
**daß** der Pulsweitenmodulations-Generator (PWM-G) einen Sägezahngenerator aufweist, dessen Ausgangsspannung sich zwischen einem unteren und einem oberen Spannungswert periodisch ändert,
**daß** bei einer Regelspannung (ust1) kleiner als der untere Spannungswert der Pulsweitenmodulations-Generator (PWM-G) kein Ansteuersignal (ust) an die Leistungsendstufe (LEST) abgibt,
**daß** bei einer Regelspannung (ust1) größer als der untere Spannungswert aber kleiner als der obere Spannungswert der Pulsweitenmodulations-Generator (PWM-G) die Leistungsendstufe (LEST) mit zunehmendem Sollwert (Usoll) im PWM-Betrieb mit zunehmender Pulsweite steuert und
**daß** bei einer Regelspannung (ust1) größer als der obere Spannungswert der Pulsweitenmodulations-Generator (PWM-G) die Leistungsendstufe (LEST) in den Dauereinschaltzustand steuert.

6. Leistungsendstufenschaltung nach einem der Ansprüche 1 bis 5,
**dadurch gekennzeichnet,**
**daß** die zusätzliche Vorspannung (uv2) dem nichtinvertierenden Steuereingang (5) zugeführt ist, und dem invertierenden Steuereingang (6) einer Aufschaltestufe (U1B) der Sollwert (Usoll) zugeführt sind,
**daß** bei Übereinstimmung des vorgegebenen Sollwertes (Usollv) mit der Vorspannung (uv2) das Ausgangspotential der Aufschaltestufe (U1B) vom Pluspotential (+Ubatt) zum Massepotential wechselt,
**daß** der Ausgang (7) der Aufschaltestufe (U1B) über eine Entkopplungsdiode (D1) mit dem nichtinvertierenden Steuereingang (2) des Spannungsreglers (U1A) verbunden ist und
**daß** das Ausgsgangspotential der Aufschaltestufe (U1B) einen Spannungssprung (usp) am nichtinvertierenden Steuereingang (2) des Spannungsreglers (U1A) erzeugt, der einen Spannungssprung zur Vergrößerung der Regelspannung (ust1) zur Folge hat und den Pulsweitenmodulations-Generator (PWM-G) und die Leistungsendstufe (LEST) sprungartig in den Dauereinschaltzustand steuert.

7. Leistungsendstufenschaltung nach einem der Ansprüche 1 bis 6,
**dadurch gekennzeichnet,**
**daß** der Ausgang (7) der Aufschaltestufe (U1B) über einen Widerstand (R5) mit dem nichtinvertierenden Steuereingang (5) derselben verbunden ist, der zur Reduzierung der Vorspannung (uv2) führt, die etwa einem Sollwert (Usoll) von etwa 92 % des maximalen Sollwertes (Usollmax) entspricht.

8. Leistungsendstufenschaltung nach einem der Ansprüche 1 bis 7,
**dadurch gekennzeichnet,**
**daß** ein Mikroprozessor die Funktionen von Spannungsregler (U1A) und Aufschaltestufe (U1B) steuert.

## Claims

1. Power output stage circuit with a pulse-width-modulation generator and an upstream control circuit which, as a function of an external prescribable desired value, an actual value of the power output stage and a reference voltage derived from the supply voltage, controls the pulse-width-modulation generator and the power output stage into a continuously deenergized state, a PWM operation with pulse-width-modulated pulses and a continuously energized state, **characterized in that** it changes prematurely from PWM operation to continuously energized operation as a function of a prescribable desired value and the supply voltage (Ubatt), and reverts to PWM operation again with hysteresis of these values.

2. Power output stage circuit according to Claim 1, **characterized in that** the control circuit is fed an additional bias voltage (uv2) which, in conjunction with a prescribed desired value (Usollv) which is smaller by a prescribed absolute value by comparison with the desired value (Usolimax) effecting the maximum pulse width, prematurely controls the pulse-width-modulation generator (PWM-G) and the power output stage circuit (LEST) abruptly into the continuously energized state.

3. Power output stage circuit according to Claim 1 or 2, **characterized in that** the prescribed desired value (Usollv) corresponds to a pulse width of approximately 95% of the maximum pulse width (period).

4. Power output stage circuit according to one of Claims 1 to 3, **characterized in that** the pulse width achieved at the prescribed desired value (Usollv) is reduced by comparison with the period by a length of time which is longer than the times of the switching edges of the pulses in PWM operation.

5. Power output stage circuit according to one of Claims 1 to 4, **characterized in that** the control circuit includes a voltage regulator (U1A) whose non-inverting control input (2) is fed the reference voltage (uv1), and whose inverting control input (3) is fed the desired value (Usoll) via a resistor (R6), and the output voltage (ua) of the power output stage (LEST) as actual value (Uist) via a resistor (R7), **in that** the voltage regulator (U1A) outputs a regulation voltage (ust1) which increases with increasing desired value (Usoll), **in that** the pulse-width-modulation generator (PWM-G) has a saw-tooth voltage generator whose output voltage changes periodically between a lower and higher voltage value, **in that** given a lower regulation voltage (ust1) than the lower voltage value the pulse-width-modulation generator (PWM-G) does not output a drive signal (ust) to the power output stage (LEST), **in that** given a higher regulation voltage (ust1) than the lower voltage value, but a lower one than the upper voltage value, the pulse-width-modulation generator (PWM-G) controls the power output stage (LEST) with increasing desired value (Usoll) in PWM operation with increasing pulse width, and **in that** given a higher regulation voltage (ust1) than the upper voltage value the pulse-width-modulation generator (PWM-G) controls the power outputs stage (LEST) into the continuously energized state.

6. Power output stage circuit according to one of Claims 1 to 5, **characterized in that** the additional bias voltage (uv2) is fed to the non-inverting control input (5), and the desired value (Usoll) is fed to the inverting control input (6) of a connecting stage (U1B), **in that** the output potential of the connecting stage (U1B) changes from the positive potential (+Ubatt) to the frame potential in the event of correspondence between the prescribed desired value (Usollv) and the bias voltage (uv2), **in that** the output (7) of the connecting stage (U1B) is connected via a decoupling diode (D1) to the non-inverting control input (2) of the voltage regulator (U1A), and **in that** the output potential of the connecting stage (U1B) generates a voltage jump (usp) at the non-inverting control input (2) of the voltage regulator (U1A) which entails a voltage jump to an increase in the regulation voltage (ust1), and which controls the pulse-width-modulation generator (PWM-G) and the power output stage (LEST) abruptly into the continuously energized state.

7. Power output stage circuit according to one of Claims 1 to 6, **characterized in that** the output (7) of the connecting stage (U1B) is connected via a resistor (R5) to the non-inverting control input (5) thereof which leads to the reduction of the bias voltage (uv2) which corresponds approximately to a desired value (Usoll) of approximately 92% of the maximum desired value (Usollmax).

8. Power output stage circuit according to one of Claims 1 to 7, **characterized in that** a microprocessor controls the functions of voltage regulator (U1A) and connecting stage (U1B).

## Revendications

1. Etage de sortie de puissance comprenant un générateur de modulation de largeur d'impulsion précédé d'un circuit de régulation, qui en fonction d'une valeur de consigne prédéterminée de manière externe, d'une valeur réelle de l'étage de sortie de puissance et d'une tension de référence déduite de la tension d'alimentation, commande le générateur de modulation de largeur d'impulsion et l'étage de puissance selon un mode déclenché permanent, un mode à largeur d'impulsion PWM avec des impulsions modulées en largeur et un mode passant permanent,
**caractérisé en ce qu'**
en fonction d'une valeur de consigne prédéterminée et la tension d'alimentation (Ubatt) on passe par anticipation du mode PWM au mode passant permanent et avec hystérésis on revient de ces valeurs de nouveau au mode PWM.

2. Etage de sortie de puissance selon la revendication 1,
**caractérisé en ce que**
le circuit de régulation reçoit une tension de polarisation (uv2) supplémentaire qui, en liaison avec une valeur de consigne prédéterminée (Usollv) inférieure d'une valeur prédéterminée à la valeur de consigne (Usollmax) donnant la largeur d'impulsion maximale, commande le générateur de modulation de largeur d'impulsion (PWM-G) et l'étage de sortie de puissance (LEST) par anticipation, brusquement dans le mode passant permanent.

3. Etage de sortie de puissance selon l'une quelconque des revendications 1 ou 2,
**caractérisé en ce que**
la valeur de consigne prédéterminée (Usollv) correspond à une largeur d'impulsion d'environ 95 % de la largeur d'impulsion maximale (durée de la période).

4. Etage de sortie de puissance selon l'une quelconque des revendications 1 à 3,
**caractérisé en ce que**
la largeur d'impulsion obtenue pour une valeur de consigne prédéterminée (Usollv) est, par rapport à la durée de la période, réduite d'une durée plus grande que les durées des flancs de commutation des impulsions en mode PWM.

5. Etage de sortie de puissance selon l'une quelconque des revendications 1 à 4,
**caractérisé en ce que**
- le circuit de régulation comporte un régulateur de tension (U1A) dont l'entrée de commande non inversée (2) reçoit la tension de référence (uv1) et dont l'entrée de commande inversée (3) reçoit par une résistance (R6), la valeur de consigne (Usoll) et par une résistance (R7), la tension de sortie (ua) de l'étage de sortie de puissance (LEST) comme valeur réelle (Uist),
- le régulateur de tension (U1A) émet une tension de régulation (ust1) qui augmente avec la valeur de consigne (Usoll),
- le générateur de modulation de largeur d'impulsion (PWM-G) comporte un générateur de dents de scie dont la tension de sortie varie entre une valeur de tension inférieure et une valeur de tension supérieure selon une variation périodique,
- pour une tension de réglage (ust1) inférieure à la valeur inférieure de la tension du générateur de modulation de largeur d'impulsion (PWM-G), il ne fournit aucun signal de commande (ust) à l'étage de sortie de puissance (LEST),
- pour une tension de régulation (ustl) supérieure à la valeur inférieure de la tension mais inférieure à la valeur supérieure de la tension, le générateur de modulation de largeur d'impulsion (PWM-G) commande l'étage de puissance (LEST) avec une valeur de consigne croissante (Usoll) en mode PWM avec une largeur d'impulsion croissante,
- pour une tension de régulation (ust1) supérieure à la valeur de tension supérieure du générateur de modulation de largeurs d'impulsion (PWM-G), il commande l'étage de sortie de puissance (LEST) en mode passant permanent.

6. Etage de sortie de puissance selon l'une quelconque des revendications 1 à 5,
**caractérisé en ce que**
- la tension de polarisation supplémentaire (uv2) est appliquée à l'entrée de commande non inversée (5) et l'entrée de commande inversée (6) d'un étage d'addition (U1B) reçoit la valeur de consigne (Usoll),
- en cas de concordance entre la valeur de consigne prédéterminée (Usollv) et la tension de polarisation (uv2), le potentiel de sortie de l'étage de combinaison (U1B) passe du potentiel positif (+Ubatt) au potentiel de masse,
- la sortie (7) de l'étage de combinaison (U1B) est reliée par une diode de couplage (D1) à l'entrée de commande non inversée (2) du régulateur de tension (U1A), et
- le potentiel de sortie de l'étage de combinaison (U1B) génère un saut de tension (usp) appliqué à l'entrée de commande non inversée (2) du régulateur de tension (U1A), qui par suite produit un saut de tension pour augmenter la tension de régulation (ust1) et commande le générateur de modulation de largeur d'impulsion (PWM-G) et l'étage de sortie de puissance (LEST) pour les faire passer brusquement en mode passant permanent.

7. Etage de sortie de puissance selon l'une quelconque des revendications 1 à 6,
**caractérisé en ce que**
la sortie (7) de l'étage de combinaison (U1B) est reliée par une résistance (R5) à l'entrée de commande non inversée (5) de cet étage conduisant à une réduction de la tension de polarisation (uv2) représentant une valeur de consigne (Usoll) correspondant sensiblement à 92 % de la valeur de consigne maximale (Usollmax).

8. Etage de sortie de puissance selon l'une quelconque des revendications 1 à 7,
**caractérisé en ce qu'**
un microprocesseur commande le fonctionnement du régulateur de tension (U1A) et de l'étage de combinaison (U1B).
